# EUROPEAN PATENT SPECIFICATION

(11) **EP 2 980 729 B1**
(45) Date of publication and mention of the grant of the patent: **04.09.2024**
(21) Application number: 15178354.5
(22) Date of filing: 24.07.2015
(51) Int. Cl.: G06Q 20/20, G06V 20/64, G07G 1/00

(54) **INFORMATION PROCESSING APPARATUS AND METHOD FOR RECOGNIZING OBJECT BY THE SAME**
INFORMATIONSVERARBEITUNGSVORRICHTUNG UND VERFAHREN ZUR OBJEKTERKENNUNG DAMIT
APPAREIL DE TRAITEMENT D'INFORMATIONS ET PROCÉDÉ DE RECONNAISSANCE D'OBJET PAR CELUI-CI

(30) Priority: 28.07.2014 JP 2014153099
(43) Date of publication of application: 03.02.2016
(73) Proprietor: Toshiba TEC Kabushiki Kaisha, Tokyo 141-0032 (JP)
(72) Inventor: NAITO, Hidehiro, Shinagawa-ku, Tokyo 141-0032 (JP)
(74) Representative: Bandpay & Greuter

(56) References cited:
- US-A1- 2014 126 772
- JIANG LIXING ET AL: "Multi-class fruit classification using RGB-D data for indoor robots", 2013 IEEE INTERNATIONAL CONFERENCE ON ROBOTICS AND BIOMIMETICS (ROBIO), IEEE, 12 December 2013 (2013-12-12), pages 587 - 592, XP032579710, DOI: 10.1109/ROBIO.2013.6739523
- ANDERSON ROCHA ET AL: "Automatic fruit and vegetable classification from images", COMPUTERS AND ELECTRONICS IN AGRICULTURE, vol. 70, no. 1, 1 January 2010 (2010-01-01), AMSTERDAM, NL, pages 96 - 104, XP055555233, ISSN: 0168-1699, DOI: 10.1016/j.compag.2009.09.002

## Description

### FIELD

Embodiments described herein relate to an information processing apparatus and a method for recognizing an object by the information processing apparatus.

### BACKGROUND

A technology is known which compares the feature amount of an object extracted from an image obtained by photographing the object with each of the feature amounts for collation pre-registered in an information dictionary and recognizes the category of the object according to the similarity degree therebetween. Besides, a store system is proposed which registers the sales of a commodity such as a fresh fruit or vegetable recognized using a technology relating to an object recognition.

Moreover, the surface color of a commodity is almost same to the color of the background depending on a type or category of the commodity when such a commodity is photographed. In this case, it is difficult to detect the boundary between the commodity and the background, resulting in that it is sometimes impossible to extract a feature amount a level of which the commodity can be recognized. Thus, it is considered that there is still room for improvement of recognition rate.

Also known in the literature are:
- Patent US 2014/126772 A1, which discloses a commodity recognition apparatus;
- Document "Multi-class fruit classification using RGB-D data for indoor robots", Jiang LIXING et al discloses a system to classify fruits under varying pose and lighting conditions tailored for an object recognition system on a mobile platform; and
- Document "Automatic fruit and vegetable classification from images", Anderson Rocha et al discloses an approach for a multi-class fruit-and-vegetable categorization task in a semi-controlled environment, such as a distribution center or the supermarket cashier.

### DESCRIPTION OF THE DRAWINGS

Fig. 1 is an oblique view exemplifying a checkout system according to an embodiment;
Fig. 2 is a block diagram illustrating the hardware structures of the POS terminal and the commodity reading apparatus shown in Fig. 1;
Fig. 3 is a schematic diagram illustrating the data structure of the PLU file shown in Fig. 2;
Fig. 4 is a block diagram illustrating the functional structure of the POS terminal shown in Fig. 1;
Fig. 5 is a diagram exemplifying an image acquired by an image acquisition unit;
Fig. 6 is a diagram exemplifying the operations of a region cutting unit;
Fig. 7 is a diagram exemplifying the operations of a region segmenting unit;
Fig. 8 is a diagram exemplifying the display on a commodity candidate screen;
Fig. 9 is a flowchart exemplifying a sales registration processing carried out by a POS terminal according to an embodiment;
Fig. 10 is an oblique view illustrating the appearance of a self-checkout POS; and
Fig. 11 is a block diagram illustrating the hardware structure of a self-checkout POS.

### SUMMARY

The invention is set out in the appended set of claims.

### DETAILED DESCRIPTION

By taking a checkout system as an example, the information processing apparatus and the information processing method according to the present embodiment are described below with reference to the accompanying drawings. A store system is a checkout system (POS system) equipped with a POS (Point of Sales) terminal for the registration and settlement of a commodity in one transaction. The present embodiment is an example of the application to a checkout system introduced into a store such as a supermarket.

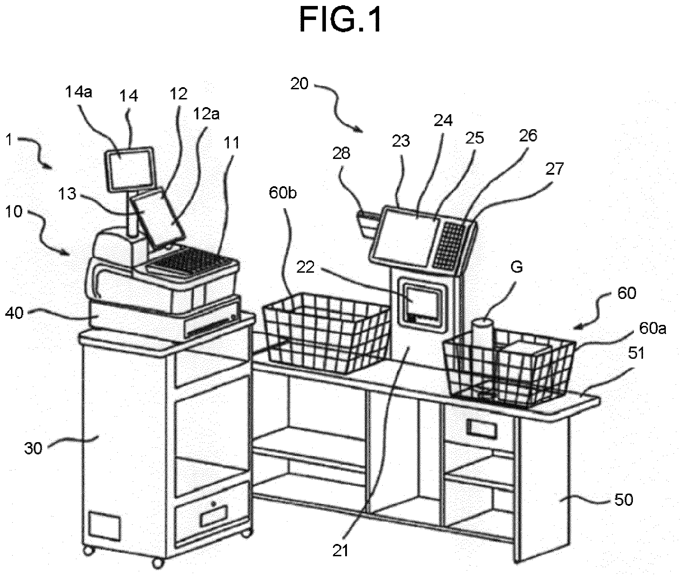

Fig. 1 is an oblique view exemplifying a checkout system 1. As shown in Fig. 1, a checkout system 1 comprises a POS terminal 10 for the registration and settlement of commodities in one transaction and a commodity reading apparatus 20 for reading information relating to the commodities. The POS terminal 10 is hereinafter used as an information processing apparatus according to the present embodiment.

The POS terminal 10 is mounted on a drawer 40 on a checkout counter 30. The drawer 40 is opened under the control of the POS terminal 10. A keyboard 11 that is press-operated by an operator (shop clerk) is arranged on the upper surface of the POS terminal 10. A first display device 12 for displaying information to the operator is arranged behind the keyboard 11. The first display device 12 displays information on a display surface 12a thereof. A touch panel 13 is laminated on the display surface 12a. A rotatable second display device 14 is vertically arranged at a position behind the first display device 12. The second display device 14 displays information on the display surface 14a thereof. The second display device 14 is rotated so that the display surface 14a is oriented toward a customer to show information to the customer.

A long desk-shaped counter table 50 is arranged in an L shape adjacent to the checkout counter 30 on which the POS terminal 10 is placed. A receiving surface 51 is formed on the counter table 50. A shopping basket 60 for accommodating a commodity G is placed on the receiving surface 51. The shopping basket 60 includes a first shopping basket 60a which is carried by a customer and a second shopping basket 60b which is placed opposite to the first shopping basket 60a across the commodity reading apparatus 20 as shown in Fig. 1. The shopping basket 60, which is not limited to be basket-shaped, may be a tray or the like. Moreover, the shopping basket 60 (the second shopping basket 60b), which is not limited to be of a basket shape, may be a box-shaped or a bag-shaped.

The commodity reading apparatus 20, which is connected with the POS terminal 10 to transmit/receive data to or from the POS terminal 10, is arranged on the receiving surface 51 of the counter table 50. The commodity reading apparatus 20 has a thin rectangular-shaped housing 21. A reading window 22 is arranged on the front surface of the housing 21. A displaying and operating unit 23 is arranged at the upper part of the housing 21. A first display device 25, acting as a display unit, on which a touch panel is laminated is arranged on the displaying and operating unit 23. A keyboard 26 is arranged at the right side of the first display device 25. The card reading slot 27 of a card reader is arranged at the right side of the keyboard 26. A second display device 28 for providing information to the customer, standing opposite to the operator, is arranged at a left backside of the displaying and operating unit 23.

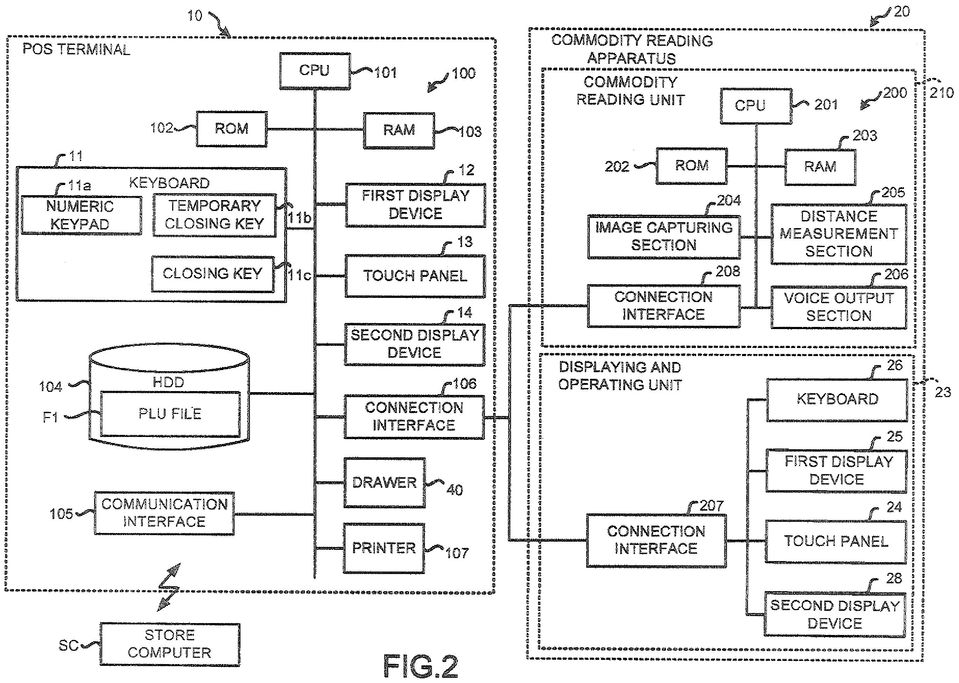

The commodity reading apparatus 20 is provided with a commodity reading unit 210 (refer to Fig. 2) which is equipped with an image capturing section 204 behind the reading window 22 and a distance measurement section 205 (refer to Fig. 2) .

The commodities G to be settled in one translation are accommodated in the first shopping basket 60a carried by the customer. The commodities G in the first shopping basket 60a are moved one by one to the second shopping basket 60b by the operator who operates the commodity reading apparatus 20. When being moved, the commodity G faces the reading window 22 of the commodity reading apparatus 20. At this time, the image capturing section 204 (refer to Fig. 2) arranged in the reading window 22 photographs the commodity G, on the one hand, and the distance measurement section 205 (refer to Fig. 2) arranged in the reading window 22 measures the distance from the image capturing section 204 to an object (commodity) located in an image capturing range.

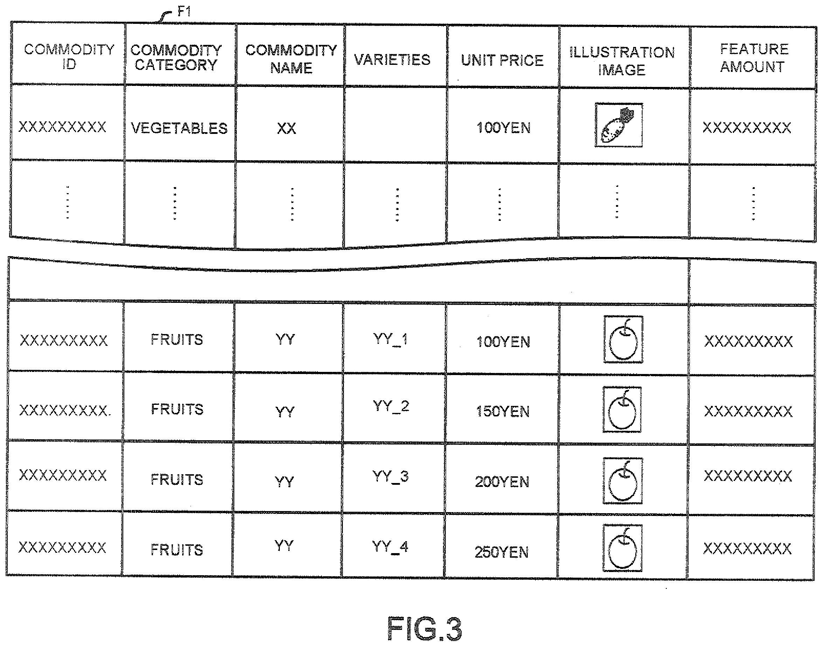

In the commodity reading apparatus 20, a screen is displayed on the displaying and operating unit 23 to specify which one of the commodities registered in a PLU file F1 (refer to Fig. 3) described later is corresponding to the commodity G contained in the image captured by the image capturing section 204. Moreover, the commodity reading apparatus 20 notifies the commodity ID of the specified commodity to the POS terminal 10. In the POS terminal 10, the information relating to the sales registration of the commodity corresponding to the commodity ID notified by the commodity reading apparatus 20, such as the commodity category, the commodity name and the unit price of the commodity, are recorded in a sales master file (not shown) for sales registration.

Fig. 2 is a block diagram illustrating the hardware structures of the POS terminal 10 and the commodity reading apparatus 20. The POS terminal 10 comprises a microcomputer 100 functioning as an information processing unit for carrying out an information processing. The microcomputer 100 is formed by connecting, via a bus line, a ROM (Read Only Memory) 102 and a RAM (Random Access Memory) 103 with a CPU (Central Processing Unit) 101 that carries out various operations to control each unit.

The keyboard 11, the first display device 12, the touch screen 13, the second display device 14 and the drawer 40 are all connected with the CPU 101 of the POS terminal 10 via various input/output circuits (not shown) to be controlled by the CPU 101.

The keyboard 11 includes a numeric keypad (ten keys) 11a on the upper surface of which numeric characters or arithmetic operators are displayed or printed, a temporary closing key 11b, a closing key 11c and so on.

The CPU 101 of the POS terminal 10 is connected with an HDD (Hard Disk Drive) 104 in which various programs and files are stored. When the POS terminal 10 is started, the programs and files stored in the HDD 104 are all or partially copied into the RAM 103 to be executed by the CPU 101. An example of the program stored in the HDD 104 is an application program for a sales registration processing or information dictionary registration processing described later. An example of the file stored in the HDD 104 is a PLU file F1.

The PLU file F1 is a commodity file in which information relating to the sales registration of each commodity G displayed in a store for sale is stored.

The PLU file F1 is used hereinafter as an information dictionary; however, the information dictionary may be another different file. The information dictionary stores the data for collation (feature amount) of a commodity extracted from the image data obtained by photographing the commodity. In the case where the information dictionary is another file but not the PLU file F1, the data (feature amount) stored in the information dictionary corresponds to the information (recognition information) stored in the PLU file F1. The feature amount is obtained by parameterizing external characteristics of a commodity, including the standard shape, the surface hue, the pattern and the flatness or unevenness of the commodity G.

Fig. 3 is a schematic diagram illustrating the data structure of the PLU file F1. As shown in Fig. 3, the PLU file F1 stores the commodity information, the illustration image and the feature amount of each commodity. The commodity information includes a commodity ID which is uniquely assigned to a commodity as identification information, the commodity category the commodity belongs to, the commodity name and the unit price and other related information. The illustration image is image data which represents a commodity with a picture or illustration.

The feature amount is information representing the external characteristics, such as the tint or the surface flatness, of the commodity read from an image obtained by photographing the commodity. The feature amount is used as data for collation in the similarity degree determination process described later.

If the category of a commodity needs to be recognized (detected), information relating to commodity, such as the commodity name or unit price of a commodity, an illustration image showing the commodity and the feature amount of the commodity are managed, as shown in Fig. 3. For example, if commodities belong to the type 'YY', information relating to a commodity, the illustration image and the feature amount of the commodity are managed for each category 'YY_1' , 'YY_2' or 'YY_3'. Further, in the case where a candidate is displayed with characters but not displayed with an illustration image, it is not needed to store the illustration image of the candidate in the PLU file F1.

Referring back to Fig. 2, the CPU 101 of the POS terminal 10 is connected with a Store Computer SC and a communication interface 105 for data communication via input/output circuits (not shown). The Store Computer SC is arranged at the back office of a store. The PLU file F1 delivered to the POS terminal 10 is stored in the HDD (not shown) of the store computer SC.

The CPU 101 of the POS terminal 10 is connected with a connection interface 106 which is capable of transmitting/receipting data to or from the commodity reading apparatus 20. The connection interface 106 is connected with the commodity reading apparatus 20. The CPU 101 of the POS terminal 10 is further connected with a printer 107 for printing a receipt and the like. The POS terminal 10 prints the content of one transaction on a receipt through the printer 107 under the control of the CPU 101.

The commodity reading apparatus 20 also comprises a micro computer 200 which is formed by connecting a ROM 202 and a RAM 203 with a CPU 201 via a bus line. The programs executed by the CPU 201 are stored in the ROM 202. The image capturing section 204, the distance measurement section 205 and a voice output section 206 are connected with the CPU 201 via various input/output circuits (not shown). The image capturing section 204, the distance measurement section 205 and the voice output section 206 operate under the control of the CPU 201.

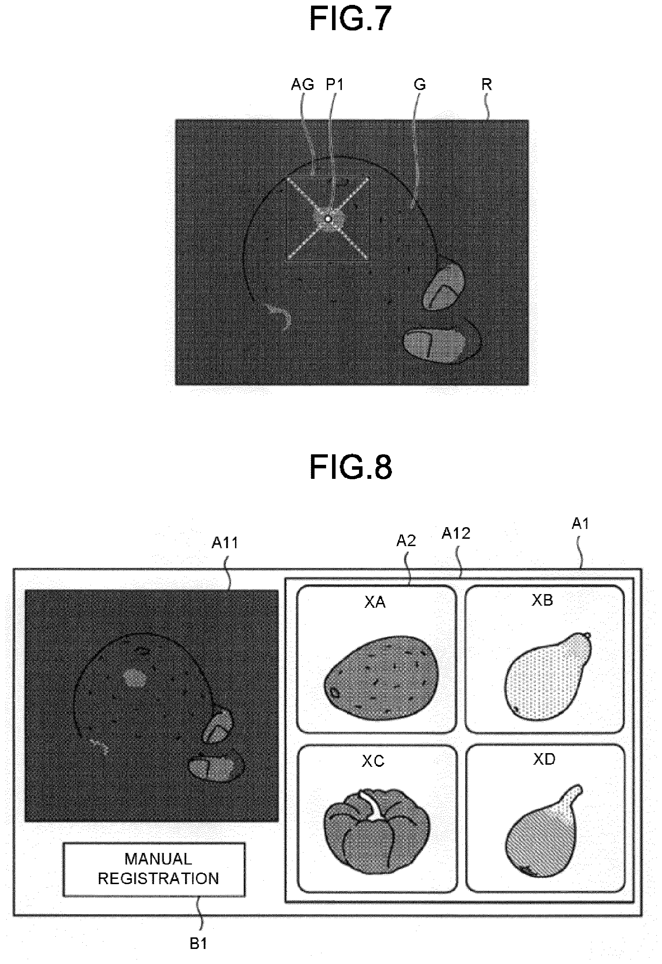

The displaying and operating unit 23 is connected with the commodity reading unit 210 and the POS terminal 10 via a connection interface 207. The displaying and operating unit 23 operates under the control of the CPU 201 of the commodity reading unit 210 and the CPU 101 of the POS terminal 10. Here, the first display device 25 displays various screens such as a commodity candidate screen (refer to Fig. 8) described later under the control of the CPU 101 or CPU 201. Further, the first display device 25 displays a job selection screen (not shown) for selecting various indicated jobs. The job selection screen includes selection menus such as, for example, 'background registration', 'exception color region registration', 'feature amount registration', ' sales registration' for instructing the execution of each processing described later.

The image capturing section 204, which includes an image pickup device such as a color CCD image sensor or a color CMOS image sensor, photographs through the reading window 22 under the control of the CPU 201. For example, the image capturing section 204 captures dynamic images or moving pictures at 30fps. The frame images (images) sequentially captured by the image capturing section 204 at a given frame rate are stored in the RAM 203. Further, to photograph a moving commodity G without blur, the shutter time of the image capturing section 204 is preferably set to be short.

The distance measurement section 205 includes a distance sensor such as a distance image sensor using TOF (Time Of Flight) system or a laser range scanner. The distance measurement range of the distance measurement section 205 is set to be substantially equal to the image photographing range of the image capturing section 204. The distance measurement section 205 operates under the control of the CPU 201 to measure the distance (depth) to an object located in the image photographing range of the image capturing section 204. If the image capturing section 204 has functions of a distance image sensor, the image capturing section 204 can also be used as the distance measurement section 205.

The voice output section 206 includes a voice circuit and a loudspeaker for generating a predetermined warning voice or sound. The voice output section 206 outputs a warning voice or sound under the control of the CPU 201.

Further, the CPU 201 is connected with a connection interface 208 which is connected with the connection interface 106 of the POS terminal 10 to transmit/receive data to or from the POS terminal 10. The CPU 201 transmits/receives data to or from the displaying and operating unit 23 via the connection interface 208.

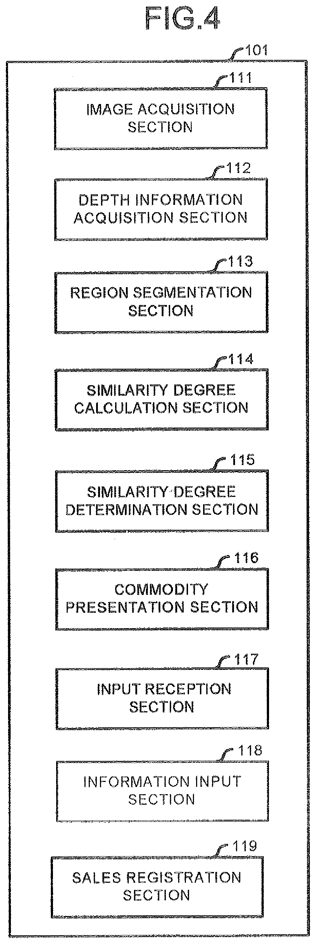

Sequentially, the functional structure of the POS terminal 10 realized through the execution of programs by the CPU 101 is described below with reference to Fig. 4.

Fig. 4 is a block diagram illustrating the functional structure of the POS terminal 10. As shown in Fig. 4, by executing the programs stored in the HDD 104, the CPU 101 of the POS terminal 10 functions as an image acquisition section 111, a depth information acquisition section 112, a region segmentation section 113, a similarity degree calculation section 114, a similarity degree determination section 115, a commodity presentation section 116, an input reception section 117, an information input section 118 and a sales registration section 119 which are described below.

The image acquisition section 111 outputs an image capturing ON-signal to the image capturing section 204 to start an image capturing operation. The image acquisition section 111 acquires the images (frame images) that are captured by the image capturing section 204 and stored in the RAM 203 after the image capturing operation starts. The image acquisition section 111 acquires the images in the order that the images are sequentially stored in the RAM 203.

The depth information acquisition section 112 acquires the measurement result of the distance measurement section 205 as depth information, in synchronization with the image acquisition timing by the image acquisition section 111.

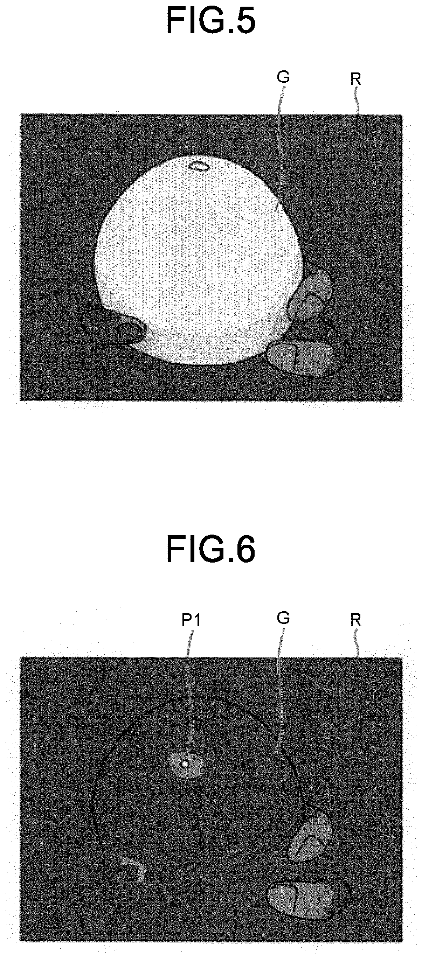

Fig. 5 is a diagram exemplifying an image acquired by the image acquisition section 111. As shown in Fig. 5, when the operator holds a commodity G over the reading window 22, the image capturing section 204 captures all or part of the commodity G which enters into the image capturing range R thereof. The image acquisition section 111 sequentially acquires the images captured by the image capturing section 204. Further, the distance measurement section 205 measures the distance to an object (a commodity G or a part of the hand holding the commodity G or a background) located in the image capturing range R at the time the image capturing section 204 captures the image. The depth information acquisition section 112 acquires the distance to an object in the image capturing range R measured by the distance measurement section 205 as depth information.

The region segmentation section 113 segments a region showing a photographed commodity G from an image acquired by the image acquisition section 111 using a well-known technology such as a pattern matching technology or an edge detection technology. Specifically, the region segmentation section 113 detects the boundary between a commodity G and a background by extracting a contour from an image acquired. Next, the region segmentation section 113 segments a part of or the whole region surrounded by the contour of the commodity G as a region where the commodity G exists. A method for segmenting a region based on the foregoing well-known technology is hereinafter referred to as a conventional method.

Moreover, depending on a variety or type, or category of commodity, there is a possibility that the surface color of the commodity is almost identical to the color of the background when such a commodity is photographed. For example, in the case where the shutter time of the image capturing section 204 is set to be relatively short, the background is black. In this situation, if a commodity G (e.g. eggplant, avocado or grape) having a black or a nearly black surface color is photographed, the whole image captured is substantially of the same color. In this case, the boundary between the commodity G and the background is hardly detected if using the conventional method. Even if the region of the commodity G can be segmented from the image using a conventional method, the feature amount of the commodity G may not be extracted.

Thus, if the boundary between the commodity G and the background cannot be detected, that is, an image is substantially totally presented in the same color, then the region segmentation section 113 segments a region where the commodity G exists from the image according to depth information.

Specifically, the region segmentation section 113 determines, from the image, the existence position of an object closest to the reading window 22 (distance measurement section 205) within the objects located in the image capturing range of the image capturing section 204. Moreover, if a region of a given range is determined by taking the determined position (hereinafter referred to as a pixel position) in the image as a reference, then the region segmentation section 113 segments the determined region as a region where the commodity G exists.

Further, the determination standard for the detection of the boundary between a commodity G and a background can be set without any limitation. For example, it may be determined that the boundary between a commodity G and a background cannot be detected if the region substantially having the same color or a single color accounts for a given proportion (e.g. above 80%) of the captured image.

Fig. 6 and Fig. 7 are diagrams exemplifying the operations of the region segmentation section 113. Fig. 6 is a diagram exemplifying an image acquired by the image acquisition section 111. In Fig. 6, an example in which the surface color of a commodity G is substantially identical to a background is illustrated. In this situation, the region segmentation section 113 determines the pixel position of the object closest to the distance measurement section 205 (reading window 22) from an image according to the depth information acquired by the depth information acquisition section 112. Here, if the object at the pixel position P1 is closest to the distance measurement section 205, as shown in Fig. 7, the region segmentation section 113 sets a region AG by taking the pixel position P1 as a reference to segment the region AG. Further, in Fig. 7, an example in which a rectangular region AG is extracted by taking the pixel position P1 as the center, however, the shape or size of the extracted region AG is not limited to this.

When a commodity is read by the commodity reading apparatus 20, the operator holds the commodity G over the reading window 22 so that the commodity G can be photographed by the image capturing section 204. At this time, the commodity G protrudes towards the reading window 22. Thus, among the objects located in the image capturing range of the image capturing section 204, the commodity G becomes closest to the reading window 22 (distance measurement section 205).In the embodiment, focusing on the manner of the operation described above, the pixel position of the object closest to the distance measurement section 205 is determined in the image and a given area surrounding the pixel position is segmented. Thus, the region where a commodity G exits can be effectively segmented even if the commodity G and the background are substantially represented in the same color.

Further, to determine a situation that no commodity G held to the reading window 22, that is, absence of a commodity G in the image capturing range of the image capturing section 204, a threshold value is set for the determination of a closest distance (depth). Specifically, if the distance to the object closest to the reading window 22 (distance measurement section 205) is within the threshold value (e.g. 10cm), the region segmentation section 113 determines a pixel position corresponding to the object (commodity G) . On the other hand, if the distance to the object closest to the reading window 22 (distance measurement section 205) is beyond the threshold value, the region segmentation section 113 determines absence of a commodity G in the image capturing range instead of determining a pixel position. In this way, the execution of an unnecessary processing is prevented in the case of the absence of a commodity G in the image capturing range, thus improving processing efficiency.

Returning to Fig. 4, the similarity degree calculation section 114 extracts feature amount from the region segmented by the region segmentation section 113, that is, from a part or all of the image of the commodity G captured by the image capturing section 204. Here, the feature amount extracted by the similarity degree calculation section 114 represents surface conditions, such as the tint and the unevenness, of the commodity G.

Further, the similarity degree calculation section 114 compares the feature amount of each of the commodities registered in the PLU file F1 (hereinafter referred to as a registered commodity) with that of the commodity G to calculate the similarity degree between the commodity G and each of the registered commodities. The similarity degree calculation section 114 calculates the similarity degree of each registered commodity with the commodity G to recognize a registered commodity the similarity degree of which is higher than a given threshold value as a candidate for the commodity G. Here, the similarity degree represents how much similar a part of or all of the image of the commodity G is with the image of a registered commodity if the similarity degree of a registered commodity is set to 100%=1. 0. Further, a weight of the surface tint and that of the unevenness is varied to calculate the similarity degree.

The recognition of an object contained in an image is referred to as a general object recognition, which is realized by using the technologies that are illustrated in the following document: YANAI KEIJI, 'The current state and further directions on Generic Object Recognition', in Proceedings of Information Processing Society of Japan, Vol. 48, No SIG 16, In URL:http://mm.cs.uec.ac.jp/IPSJ-TCVIM-Yanai.pdf [retrieved on Aug. 10, 2010].

In addition, the technology for recognizing an ordinary object through targeted regional image segmentation is described in the following document:
Jamie Shotton: "Semantic Texton Forests for Image Categorization and Segmentation, In URL:http://citeseerx.ist.psu.edu/viewdoc/download?doi=10.1 .1.145.3036&rep=rep1&type=pdf (retrieved on Aug. 10, 2010)..

Additionally, no specific limitations are given to the method for calculating the similarity degree of the image of a photographed commodity G and a registered commodity . For example, the similarity degree of the image of a photographed commodity G and each registered commodity may be calculated as an absolute evaluation or a relative evaluation.

If the similarity degree is calculated as an absolute evaluation, the image of the photographed commodity G is compared with all registered commodities one by one, and a similarity degree derived from the result of the comparison is directly adopted. Further, if the similarity degree is calculated as a relative evaluation, the sum of the similarity degrees of the photographed commodity G and the registered commodities should be 1.0 (100%).

Further, the similarity degree may be a value (similarity) representing how much similar the feature amount of a commodity G with the standard feature amount of a commodity registered in the PLU file F1. Not limited to the example, the similarity degree may also be a value representing the consistency of the feature amount of a commodity G with that of each registered commodity in the PLU file F1 or a value representing how much the feature amount of a commodity G is relevant to that of each registered commodity in the PLU file F1.

The similarity degree determination section 115 recognizes a registered commodity (commodity ID) the similarity degree of which is above a specific threshold value within feature amounts calculated by the similarity degree calculation section 114 as a candidate for the photographed commodity G (hereinafter referred to as a commodity candidate). Here, in the registered commodities the similarity degree of which is higher than the threshold value, if there is a registered commodity having a similarity degree remarkably higher than other registered commodities, then the registered commodity may automatically be determined as a determined commodity. Further, the standard for the comparison of similarity degrees can be set without any limitation.

The commodity presentation section 116 displays, on the first display device 25, information relating to a registered commodity recognized by the similarity degree determination section 115 as a commodity candidate. More specifically, the commodity presentation section 116 reads, from the PLU file F1, the record of the registered commodity recognized as a commodity candidate and displays the read record of the registered commodity on the commodity candidate screen of the first display device 25.

Fig. 8 is a diagram exemplifying an example of the display on a commodity candidate screen. As shown in Fig. 8, the commodity candidate screen A1 displayed on the first display device 25 includes a captured image area A11 and a commodity candidate area A12.

The captured image area A11 is used to display the captured image acquired by the image acquisition section 111. A manual registration button B1 for manually executing (registering) recognition of a commodity G a department codes or commodity list is arranged under the captured image area A11. The CPU 201 displays a manual registration screen (not shown) for manually executing (registering) recognition of a commodity G on the first display device 25 according to the operation on the manual registration button B1. A commodity specified through the manual registration screen is processed as a determined commodity.

The commodity candidate area A12 is used to display information relating to a registered commodity recognized as a commodity candidate. A display region A2 is arranged in the commodity candidate area A12. Fig. 8 exemplifies the arrangement of four display regions A2 in the commodity candidate area A12; however, no specific limitations are given to the number of the arranged display regions A2. The commodity presentation section 116 displays the commodity image, the commodity name or other commodity information (XA) of a commodity candidate in the display region A2. Further, the commodity candidate displayed in the commodity candidate area A12 can be selected through the touch panel 24. The operator of the commodity reading apparatus 20 can select, from the commodity candidates displayed in the commodity candidate area A12, a commodity candidate corresponding to the commodity G as a determined commodity.

The input reception section 117 receives various input operations corresponding to the displays on the first display device 25 through the touch panel 24 or keyboard 26. For example, according to an operation of selecting commodity candidates, the input reception section 117 receives an operation of selecting a determined commodity corresponding to the commodity G from the displayed commodity candidates.

The information input section 118 inputs, via the connection interface 106, information corresponding to the operation content received by the input reception section 117 into the own apparatus. For example, the information input section 118 inputs the information (e.g. commodity ID or commodity name) of a determined commodity determined by the operations described above. Further, the information input section 118 may input a sales quantity, together with a commodity ID and the like through the touch panel 24 or the keyboard 26.

The sales registration section 119 carries out the sales registration of a corresponding commodity according to the commodity ID and the sale quantity input from the information input section 118. Specifically, the sales registration section 119 records, with reference to the PLU file F1, the notified commodity ID and corresponding commodity category, commodity name, and unit price together with the sales quantity in the sales master file.

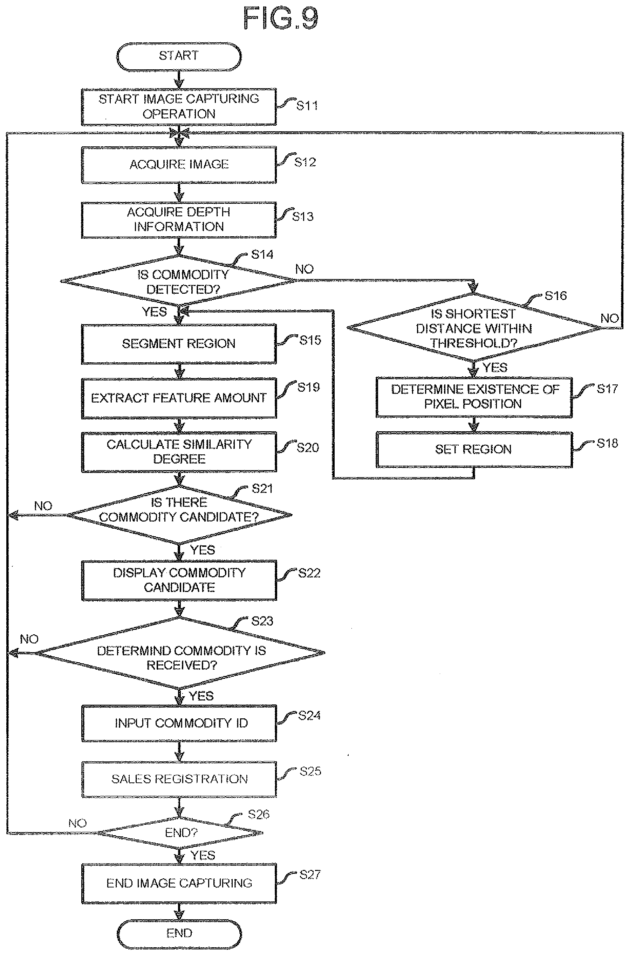

The operations of the checkout system 1 are described below. Fig. 9 is a flowchart exemplifying a sales registration processing carried out by the POS terminal 10.

The CPU 101 of the POS terminal 10 starts a sales registration processing when a 'sales registration' menu is selected from the job selection screen (not shown) displayed on the first display device 12. First, the image acquisition unit 111 outputs an image capturing ON-signal to the image capturing section 204 to start an image capturing operation (Act S11) . Then, the image acquisition section 111 acquires the image captured by the image capturing section 204 into the RAM 103 (Act S12). Further, the depth information acquisition section 112 acquires the measurement result of the distance measurement section 205 into the RAM 103 (Act S13) .

Sequentially, the region segmentation section 113 detects a commodity G from the acquired image, using a conventional method. Here, if the commodity G is detected (Act S14: Yes), the region segmentation section 113 segments the region of the detected commodity G from the image, and then Act S19 is taken.

If no commodity G is detected using the conventional method (Act S14: No), then the region segmentation section 113 determines whether or not the distance to the closest object (the shortest distance) is within a threshold value according to the acquired depth information (Act S16) . Here, if the shortest distance is determined to be above the threshold value (Act S16: No), the region segmentation section 113 determines the absence of the commodity G, and Act S12 is taken.

On the other hand, if the shortest distance is determined to be within the threshold value (Act S16: Yes), the region segmentation section 113 determines, from the image, the pixel position where the object at the shortest distance locates (Act S17) . Next, the region segmentation section 113 sets a region of a given range by taking the pixel position as the center (Act S18), and then Act S15 is taken to segment the area from the image.

Next, the similarity degree calculation section 114 extracts a feature amount of the commodity G from the region segmented in Act S15(Act S19). Afterwards, the similarity degree calculation section 114 compares the feature amount extracted in Act S19 with that of each registered commodity in the PLU file F1 to calculate the similarity degree of the registered commodity with the commodity G (Act S20).

The similarity determination section 115 determines, according to the similarity degrees calculated in Act S20, whether or not a registered commodity the similarity degree of which is above a given threshold value exists (Act S21) . Here, if there is no registered commodity the similarity degree of which is above the threshold value (Act S21: No), then Act S12 is taken again. Further, if there is a registered commodity the similarity degree of which is above the threshold value (Act S21: Yes), then the similarity determination section 115 recognizes the registered commodity (commodity ID) as a commodity candidate.

The commodity presentation section 116 displays the commodity candidate recognized in Act S21 on the first display device 25 (Act S22). Next, the input reception section 117 determines whether or not the selection on a determined commodity is received through the touch panel 24 or keyboard 26 (Act S23). Here, if the selection on a determined commodity is not received (Act S23: No), Act S12 is taken again.

Further, in Act S23, if the selection on a determined commodity is received (Act S23: Yes), then the information input section 118 inputs the commodity ID and other information of the commodity into the POS terminal 10 (Act S24), and Act S25 is taken. Here, if a sales quantity is separately input through the touch panel 24 or keyboard 26, then in Act S24, the sales quantity is input into the POS terminal 10 together with information representing the determined commodity. Further, a sales quantity '1' may be output as a default value when no sales quantity is input.

Next, according to the commodity ID and the sales quantity input in Act S24, the sales registration section 119 reads commodity information such as commodity category and unit price from the PLU file F1 and registers the read commodity information in the sales master file (Act S25).

Sequentially, the CPU 101 determines whether or not the job is ended with the termination of the sales registration according to an operation instruction from the keyboard 11 (Act S26). If the job is continued (Act S26: No), the CPU 101 takes Act S12 to continue the processing. If the job is ended (Act S26: Yes), the image acquisition section 111 outputs an image capturing OFF-signal to the image capturing section 204 to end the image capturing process of the image capturing section 204 (Act S27), then the processing (job) is ended.

As stated above, according to the POS terminal 10 of the present embodiment, a region where a commodity G exists is segmented from an image captured, using depth information if the boundary between the commodity G and a background cannot be detected. Thus, the feature amount of the commodity G can be extracted more practically, and the recognition rate of the commodity G can also be enhanced.

For example, it is described in the foregoing embodiment that a PLU file F1 is arranged in the POS terminal 10; however, the present invention is not limited to this. For example, the PLU file F1 may also be arranged in the commodity reading apparatus 20 or in an external device to which the POS terminal 10 and the commodity reading apparatus 20 are accessible.

Further, the region segmentation section 113 of the foregoing embodiment segments a region, first using a conventional method and if not succeeded, then using depth information. However, the present invention is not limited to this; for example, the region segmentation section 113 may initially segment a region according to depth information without using a conventional method.

Further, in the foregoing embodiment, the present invention is applied to the POS terminal 10 acting as an information processing apparatus having the functions of an image acquisition unit 111, a depth information acquisition unit 112, a region segmentation unit 113, a similarity degree calculation unit 114, a similarity degree determination unit 115, a commodity presentation unit 116, an input reception unit 117 and an information input unit 118. However, the present invention is not limited to this. For example, the commodity reading apparatus 20 including one or all of the foregoing functional units may output a calculation result, a determination result and a determined commodity to the POS terminal 10.

Further, in the foregoing embodiment, the present invention is applied to the checkout system 1 consisting of the POS terminal 10 and the commodity reading apparatus 20 as a store system, however, the present invention is not limited to this, the store system may be a single apparatus integrating the functions of the POS terminal 10 and the commodity reading apparatus 20. The apparatus integrating the functions of the POS terminal 10 and the commodity reading apparatus 20 may be a self-checkout apparatus (hereinafter referred to as a self-POS) used in a store such as a supermarket.

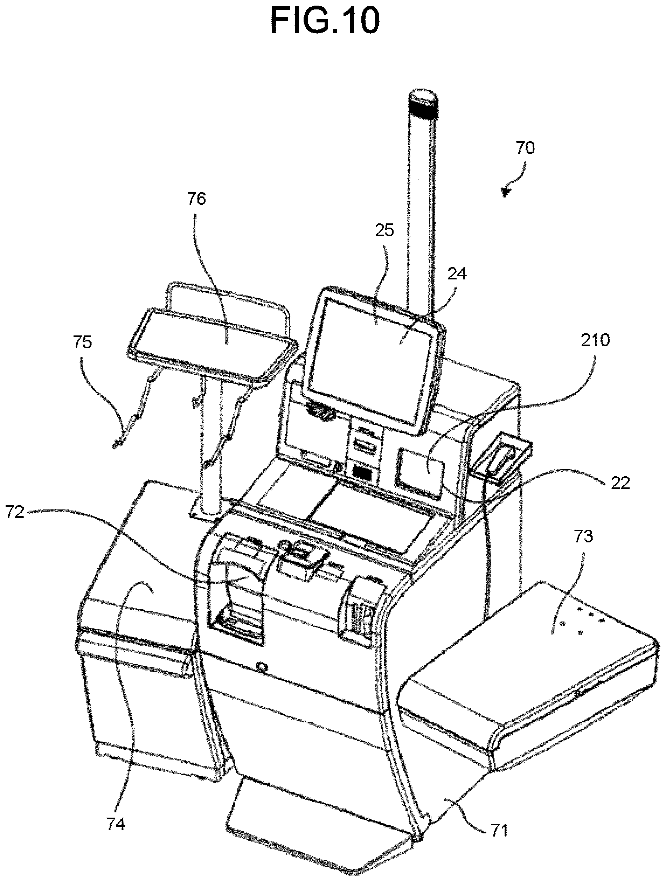

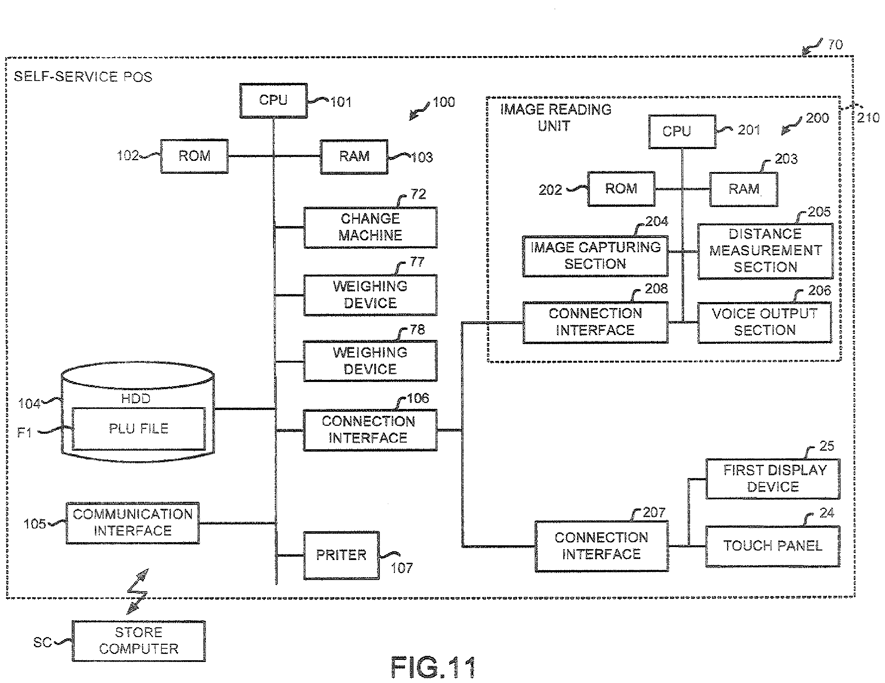

Fig. 10 is an oblique view illustrating the appearance of a self-POS 70, and Fig. 11 is a block diagram illustrating the hardware structure of the self-POS 70. The components shown in Fig. 10 and Fig. 11 which are identical to those shown in Fig. 1 and Fig. 2 are denoted by the same reference numerals and not described here repeatedly. As shown in Fig. 10 and Fig. 11, a change receiver 72 for receiving the notes or changes for a settlement is arranged on the main body 71 of the self-POS 70. Further, the main body 71 is provided with a first display device 25 having a touch panel 24 on the surface thereof and a commodity reading section 210 which reads the image of a commodity so as to recognize (detect) the category of the commodity.

The first display device 25 is, for example, a liquid crystal display. The first display device 25 displays various screens including a guidance screen, a registration screen and a settlement screen. The guidance screen is a screen for providing the customer the guidance instructing how to operate the self-POS 70. The registration screen is a screen displaying the commodity information read by the commodity reading section 210. The settlement screen is a screen on which the total amount of commodities, a pre-paid amount, a change amount and selectable payment method modes are displayed.

The commodity reading section 210 reads an image indicating a commodity with the image capturing section 204 as the customer moves the commodity across the reading window 22 of the commodity reading section 210.

A commodity holding table 73 for holding an unsettled commodity put in the basket is arranged on the right side of the main body 71. A commodity holding table 74 for holding a settled commodity is arranged on the left side of the main body 71. A bag hook 75 for hooking a bag in which settled commodities are accommodated and a temporary holding table 76 for temporarily holding a settled but not bagged commodity are arranged on the commodity holding table 74. Weighing devices 77 and 78 are arranged on the commodity holding tables 73 and 74 to confirm whether or not a commodity is unchanged in weight before and after the settlement.

In a case in which the above described self-POS is applied to a store system, the self-POS 70 functions as an information processing apparatus.

In the foregoing embodiments, the programs executed by each apparatus of the foregoing embodiments are preinstalled in the memory medium (ROM or memory unit) of the apparatus, however, the present invention is not limited to this, the programs may be recorded in a computer-readable recording medium such as a CD-ROM, a floppy disc, a CD-R and a Digital Versatile Disk (DVD) as installable or executable files. Further, the memory medium, which is not limited to a medium independent from a computer or assembled in a system, further includes a memory medium for storing or temporarily storing the programs downloaded and transferred via an LAN or the Internet.

Further, the programs executed by each apparatus of the foregoing embodiments are stored in a computer connected with a network such as the Internet and downloaded into the apparatus, or are provided or issued through a network such as the Internet.

## Claims

1. An information processing apparatus, comprising:
a first acquisition module comprising an image capturing device for photographing a given image capturing range, a first acquisition module being configured to acquire an image from the image capturing device;
a second acquisition module comprising a distance measurement device which measures a distance to an object in the image capturing range, the second acquisition module being configured to acquire a measurement result from the distance measurement device;
a segmentation module configured to segment, in the image, a region where the object exists according to the measurement result;
an extraction module configured to extract a feature amount from the region;
a calculation module configured to compare a feature amount of each article, registered beforehand in an information dictionary, with the feature amount extracted by the extraction module to calculate the similarity degree of the photographed object and the registered article, wherein the feature amount includes surface conditions of the object, wherein the calculation of the similarity degree comprises varying a weight of the surface conditions and wherein the information dictionary is connected to the information processing apparatus; and
a recognition module configured to recognize, from the articles registered in the information dictionary, a registered article the similarity degree of which is above a threshold value as a candidate for the photographed object, **characterized in that** the segmentation module is configured to:
extract a contour from the image and segment a region surrounded by the contour in the image, if a boundary in color between the object and the background can be detected in the image; or
segment, in the image, a region where the object exists according to an existence position of an object closest to the image capturing device measured by the distance in the image capturing range from the distance measurement device, if a boundary in color between the object and the background cannot be detected in the image.

2. The information processing apparatus according to claim 1, wherein the segmentation module is configured to determine the position of the object from the image if a distance from the object to the image capturing device is within a given threshold value.

3. The information processing apparatus according to any one of claims 1 to 2, wherein
the segmentation module is configured to segment, in the image, a rectangular region by taking the existence position as the center.

4. The information processing apparatus according to claim 2 or 3, wherein the segmentation module is configured to cut, from the image, a rectangular region by taking the existence position as the center.

5. A computer-implemented method for recognizing an object, including
first acquiring an image from the image capturing device which photographs a given image capturing range;
second acquiring a measurement result from the distance measurement device which measures a distance to an object in the image capturing range;
segmenting, in the image, a region where the object exists according to the measurement result;
extracting a feature amount from the region;
comparing a feature amount of each article, registered beforehand in an information dictionary, with the extracted feature amount to calculate the similarity degree of the photographed object and the registered article, wherein the feature amount includes surface conditions of the object, wherein the calculation of the similarity degree comprises varying a weight of the surface conditions;
recognizing, from the articles registered in the information dictionary, a registered article the similarity degree of which is above a threshold value as a candidate for the photographed object;
**characterized in that** the segmenting comprises:
extracting a contour from the image and segment a region surrounded by the contour in the image, if a boundary in color between the object and the background can be detected in the image; or
segmenting, in the image, a region where the object exists according to an existence position of an object closest to the image capturing device measured by the distance in the image capturing range from the distance measurement device, if a boundary in color between the object and the background cannot be detected in the image.

6. The computer-implemented method according to claim 5, the segmenting step comprising determining the position of the object from the image if a distance from the object to the image capturing device is within a given threshold value.

7. The computer-implemented method according to according to any one of claims 5 to 6, wherein the segmenting step comprises segmenting, in the image, a rectangular region by taking the existence position as the center.

## Patentansprüche

1. Informationsverarbeitungsgerät, umfassend:
ein erstes Erfassungsmodul, umfassend eine Bildaufnahmevorrichtung zum Fotografieren eines gegebenen Bildaufnahmebereichs, wobei ein erstes Erfassungsmodul konfiguriert ist, um ein Bild von der Bildaufnahmevorrichtung zu erfassen;
ein zweites Erfassungsmodul, umfassend eine Abstandsmessvorrichtung, die einen Abstand zu einem Objekt in dem Bildaufnahmebereich misst, wobei das zweite Erfassungsmodul konfiguriert ist, um ein Messresultat von der Abstandsmessvorrichtung zu erfassen;
ein Segmentierungsmodul, das konfiguriert ist, um, in dem Bild, einen Bereich zu segmentieren, in dem das Objekt gemäß dem Messresultat vorhanden ist;
ein Extraktionsmodul, das konfiguriert ist, um eine Merkmalsmenge aus dem Bereich zu extrahieren;
ein Berechnungsmodul, das konfiguriert ist, um eine Merkmalsmenge von jedem Artikel, der zuvor in einem Informationswörterbuch registriert wurde, mit der Merkmalsmenge, die durch das Extraktionsmodul extrahiert wurde, zu vergleichen, um den Ähnlichkeitsgrad des fotografierten Objekts und des registrierten Artikels zu berechnen, wobei die Merkmalsmenge Oberflächenbedingungen des Objekts beinhaltet, wobei die Berechnung des Ähnlichkeitsgrads ein Variieren eines Gewichts der Oberflächenbedingungen umfasst und wobei das Informationswörterbuch mit dem Informationsverarbeitungsgerät verbunden ist; und
ein Erkennungsmodul, das konfiguriert ist, um aus den Artikeln, die in dem Informationswörterbuch registriert sind, einen registrierten Artikel, dessen Ähnlichkeitsgrad über einem Schwellenwert ist, als einen Kandidaten für das fotografierte Objekt zu erkennen, **dadurch gekennzeichnet, dass** das Segmentierungsmodul zu Folgendem konfiguriert ist:
Extrahieren einer Kontur aus dem Bild und Segmentieren eines Bereichs, der von der Kontur umgeben ist, in dem Bild zu segmentieren, wenn eine farbliche Grenze zwischen dem Objekt und dem Hintergrund in dem Bild ermittelt werden kann; oder
Segmentieren, in dem Bild, eines Bereichs, in dem das Objekt vorhanden ist, entsprechend einer Vorhandenseinsposition eines Objekts, das der Bilderfassungsvorrichtung am nächsten ist, gemessen durch den Abstand in dem Bilderfassungsbereich von der Abstandsmessvorrichtung, wenn eine farbliche Grenze zwischen dem Objekt und dem Hintergrund in dem Bild nicht ermittelt werden kann.

2. Informationsverarbeitungsgerät nach Anspruch 1, wobei das Segmentierungsmodul konfiguriert ist, um die Position des Objekts aus dem Bild zu bestimmen, wenn der Abstand von dem Objekt zu der Bilderfassungsvorrichtung innerhalb eines bestimmten Schwellenwerts ist.

3. Informationsverarbeitungsgerät nach einem der Ansprüche 1 bis 2, wobei das Segmentierungsmodul konfiguriert ist, um in dem Bild einen rechteckigen Bereich zu segmentieren, indem die Vorhandenseinsposition als die Mitte genommen wird.

4. Informationsverarbeitungsgerät nach Anspruch 2 oder 3, wobei das Segmentierungsmodul konfiguriert ist, um aus dem Bild einen rechteckigen Bereich auszuschneiden, indem die Vorhandenseinsposition als die Mitte genommen wird.

5. Computerimplementiertes Verfahren zum Erkennen eines Objekts, das ein erstes Erfassen eines Bilds von der Bildaufnahmevorrichtung beinhaltet, die einen gegebenen Bildaufnahmebereich fotografiert;
zweites Erfassen eines Messresultats von der Abstandsmesseinrichtung, die einen Abstand zu einem Objekt in dem Bildaufnahmebereich misst;
Segmentieren, in dem Bild, eines Bereichs, in dem das Objekt gemäß dem Messresultat vorhanden ist;
Extrahieren einer Merkmalsmenge aus dem Bereich;
Vergleichen einer Merkmalsmenge von jedem Artikel, der zuvor in einem Informationswörterbuch registriert wurde, mit der extrahierten Merkmalsmenge, um den Ähnlichkeitsgrad des fotografierten Objekts und des registrierten Artikels zu berechnen, wobei die Merkmalsmenge Oberflächenbedingungen des Objekts beinhaltet, wobei die Berechnung des Ähnlichkeitsgrads ein Variieren eines Gewichts der Oberflächenbedingungen umfasst;
Erkennen, aus den Artikeln, die in dem Informationswörterbuch registriert sind, eines registrierten Artikels, dessen Ähnlichkeitsgrad über einem Schwellenwert ist, als Kandidaten für das fotografierte Objekt;
**dadurch gekennzeichnet, dass** das Segmentieren Folgendes umfasst:
Extrahieren einer Kontur aus dem Bild und Segmentieren eines Bereichs, der von der Kontur umgeben ist, in dem Bild zu segmentieren, wenn eine farbliche Grenze zwischen dem Objekt und dem Hintergrund in dem Bild ermittelt werden kann; oder
Segmentieren, in dem Bild, eines Bereichs, in dem das Objekt vorhanden ist, entsprechend einer Vorhandenseinsposition eines Objekts, das der Bilderfassungsvorrichtung am nächsten ist, gemessen durch den Abstand in dem Bilderfassungsbereich von der Abstandsmessvorrichtung, wenn eine farbliche Grenze zwischen dem Objekt und dem Hintergrund in dem Bild nicht ermittelt werden kann.

6. Computerimplementiertes Verfahren nach Anspruch 5, der Segmentierungsschritt umfassend ein Bestimmen der Position des Objekts aus dem Bild, wenn ein Abstand zwischen dem Objekt und der Bilderfassungsvorrichtung innerhalb eines bestimmten Schwellenwerts ist.

7. Computerimplementiertes Verfahren nach einem der Ansprüche 5 bis 6, wobei der Segmentierungsschritt ein Segmentieren eines rechteckigen Bereichs in dem Bild umfasst, indem die Vorhandenseinsposition als die Mitte genommen wird.

## Revendications

1. Appareil de traitement d'informations, comprenant :
un premier module d'acquisition comprenant un dispositif de capture d'image pour photographier une plage de capture d'image donnée, un premier module d'acquisition étant configuré pour acquérir une image à partir du dispositif de capture d'image ;
un deuxième module d'acquisition comprenant un dispositif de mesure de distance qui mesure une distance par rapport à un objet dans la plage de capture d'image, le deuxième module d'acquisition étant configuré pour acquérir un résultat de mesure à partir du dispositif de mesure de distance ;
un module de segmentation configuré pour segmenter, dans l'image, une région dans laquelle l'objet existe selon le résultat de mesure ;
un module d'extraction configuré pour extraire une quantité caractéristiques de la région ;
un module de calcul configuré pour comparer une quantité caractéristique de chaque article, enregistrée au préalable dans un dictionnaire d'informations, avec la quantité caractéristique extraite par le module d'extraction pour calculer le degré de similarité de l'objet photographié et de l'article enregistré, la quantité caractéristique comprenant des conditions de surface de l'objet, le calcul du degré de similarité comprenant la variation d'un poids des conditions de surface et le dictionnaire d'informations étant connecté à l'appareil de traitement d'informations ; et
un module de reconnaissance configuré pour reconnaître, à partir des articles enregistrés dans le dictionnaire d'informations, un article enregistré dont le degré de similarité est supérieur à une valeur seuil en tant que candidat pour l'objet photographié, **caractérisé en ce que** le module de segmentation est configuré pour :
extraire un contour de l'image et segmenter une région entourée par le contour dans l'image, si une limite de couleur entre l'objet et l'arrière-plan peut être détectée dans l'image ; ou
segmenter, dans l'image, une région dans laquelle l'objet existe selon une position d'existence d'un objet le plus proche du dispositif de capture d'image mesurée par la distance dans la plage de capture d'image par rapport au dispositif de mesure de distance, si une limite de couleur entre l'objet et l'arrière-plan ne peut pas être détectée dans l'image.

2. Appareil de traitement d'informations selon la revendication 1, dans lequel le module de segmentation est configuré pour déterminer la position de l'objet par rapport à l'image si une distance de l'objet au dispositif de capture d'image est inférieure à une valeur seuil donnée.

3. Appareil de traitement d'informations selon l'une quelconque des revendications 1 à 2, dans lequel
le module de segmentation est configuré pour segmenter, dans l'image, une région rectangulaire en prenant la position d'existence comme centre.

4. Appareil de traitement d'informations selon la revendication 2 ou 3, dans lequel le module de segmentation est configuré pour découper, à partir de l'image, une région rectangulaire en prenant la position d'existence comme centre.

5. Procédé mis en oeuvre par ordinateur pour reconnaître un objet, comprenant
dans un premier temps l'acquisition d'une image à partir du dispositif de capture d'image qui photographie une plage de capture d'image donnée ;
deuxièmement, l'acquisition d'un résultat de mesure provenant du dispositif de mesure de distance qui mesure une distance par rapport à un objet dans la plage de capture d'image ;
la segmentation, dans l'image, d'une région dans laquelle l'objet existe selon le résultat de mesure ;
l'extraction d'une quantité caractéristique à partir de la région ;
la comparaison d'une quantité caractéristique de chaque article, enregistrée au préalable dans un dictionnaire d'informations, à la quantité caractéristique extraite pour calculer le degré de similarité de l'objet photographié et de l'article enregistré, la quantité caractéristique comprenant les conditions de surface de l'objet, le calcul du degré de similarité comprenant la variation d'un poids des conditions de surface ;
la reconnaissance, à partir des articles enregistrés dans le dictionnaire d'informations, d'un article enregistré dont le degré de similarité est supérieur à une valeur seuil en tant que candidat pour l'objet photographié ;
**caractérisé en ce que** la segmentation comprend en outre :
l'extraction d'un contour de l'image et la segmentation une région entourée par le contour dans l'image, si une limite de couleur entre l'objet et l'arrière-plan peut être détectée dans l'image ; ou
la segmentation, dans l'image, d'une région dans laquelle l'objet existe selon une position d'existence d'un objet le plus proche du dispositif de capture d'image mesurée par la distance dans la plage de capture d'image par rapport au dispositif de mesure de distance, si une limite de couleur entre l'objet et l'arrière-plan ne peut pas être détectée dans l'image.

6. Procédé mis en oeuvre par ordinateur selon la revendication 5, le module de segmentation comprenant la détermination de la position de l'objet par rapport à l'image si une distance de l'objet au dispositif de capture d'image est conforme à une valeur seuil donnée.

7. Procédé mis en oeuvre par ordinateur selon l'une quelconque des revendications 5 à 6, dans lequel l'étape de segmentation comprend la segmentation, dans l'image, d'une région rectangulaire en prenant la position d'existence comme centre.
